## Europäisches Patentamt
(19) **European Patent Office**
**Office européen des brevets**

(11) Veröffentlichungsnummer: **0 103 863**
**B1**

(12) **EUROPÄISCHE PATENTSCHRIFT**

(45) Veröffentlichungstag der Patentschrift:
30.04.86

(51) Int. Cl.⁴: **C 01 B 7/01**

(21) Anmeldenummer: 83109175.6

(22) Anmeldetag: 16.09.83

(54) **Anlage zur Herstellung von Salzsäurelösung.**

(30) Priorität: 17.09.82 FR 8215688

(43) Veröffentlichungstag der Anmeldung:
28.03.84 Patentblatt 84/13

(45) Bekanntmachung des Hinweises auf die Patenterteilung:
30.04.86 Patentblatt 86/18

(84) Benannte Vertragsstaaten:
DE GB IT

(56) Entgegenhaltungen:
CHEMICAL AGE, Band 87, Nr. 2219, 20. Januar 1962,
Seite 136, London, GB. "French graphite unit for
production of hydrochloric acid made by U.K. firm"

(73) Patentinhaber: Le Carbone-Lorraine S.A., Tour
Manhattan 5-6 Place de l'Iris La Défense 2,
F-92400 Courbevoie (FR)

(72) Erfinder: Galopin, Gérard, 51, rue de la Cheneau,
F-57070 Metz (FR)

(74) Vertreter: Prietsch, Reiner, Dipl.-Ing. et al,
Patentanwälte Dipl.-Ing. Dipl. oec. publ. D. Lewinsky,
Dipl.-Ing. Reiner Prietsch Gotthardstrasse 81,
D-8000 München 21 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine zur Herstellung von Salzsäurelösung bestimmte geschlossene Anlage.

Um Salzsäurelösung aus Chlor und Wasserstoff herzustellen, sind folgende Schritte erforderlich:

- Wasserstoff und Chlor in einem Ofen verbrennen,
- das erzeugte Chlorwasserstoffgas in Wasser absorbieren.
- die Lösung kühlen, weil die Reaktion exotherm verläuft,
- das nichtabsorbierte Gas verarbeiten.

Damit diese Vorgänge ablaufen können, sind mehrere Einrichtungen erforderlich:

- ein Brenner,
- ein Reaktionsofen,
- eine Absorptions- und Kühlvorrichtung,
- eine Nachlaufsäule.

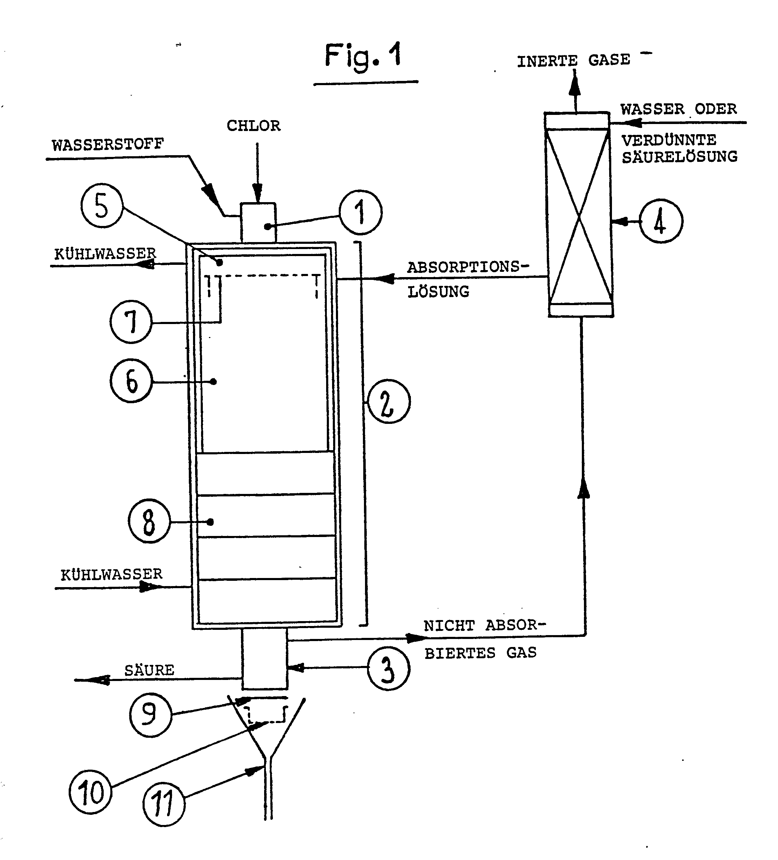

Die Anmelderin hat bereits eine Anzahl dieser Elemente zu einer einheitlichen Anlage zusammengefaßt, die in Fig.1 schematisch dargestellt ist.

Die Herstellungsanlage besteht aus zwei getrennten Abschnitten.

Zum ersten Abschnitt gehören:

- der Brenner 1,
- die Ofen-Austauscher-Absorber-Anordnung 2,
- der Separator 3.

Zum zweiten Abschnitt gehört:

- die Nachlaufsäule 4.

Der Brenner 1 besitzt je einen Einlaß für Chlor und Wasserstoff.

Die Ofen-Austauscher-Absorber-Anordnung 2 enthält einen Verbrennungsraum 5. In dem Ofen 6 ist außerdem ein Verteilerelement 7 mit einem Einlaß für die Absorptionslösung vorgesehen.

Der Austauscher-Absorber 8 setzt sich zusammen aus einem Stapel Austauscherblöcke mit vertikalen Kanälen oder Röhren.

Der Separator 3 ist ein Bauteil mit zwei aus Sicherheitsgründen höhenversetzten Auslässen: einem Auslaß für die erzeugte Säure, einem Auslaß für das nichtabsorbierte Gas. Eine mit einem Schutzkorb 10 versehene Sicherheitsscheibe 9 bildet den Boden des Separators. Ein Auslaßsammler 11 vermeidet das Herausspritzen von Säure für den Fall, daß die Sicherheitsscheibe zerstört wird.

Die Nachlaufsäule 4 besteht aus aufeinandergestapelten Elementen. Das in dem Absorber nicht absorbierte Chlorwasserstoffgas tritt unten in die Nachlaufsäule 4 ein. Das Wasser oder die verdünnte Säure gelangen von oben in die Nachlaufsäule 4. Die Inertgase werden in die Umgebungsluft entlassen (der Gehalt der Inertgase an Chlorwasserstoffsäure muß unter 50 ppm liegen).

Diese nicht vollständig geschlossene Anlage bietet gewisse Vorteile. Eine der besonderen Eigentümlichkeiten der Syntheseöfen ist die Anordnung des Brenners. Im Gegensatz zu den anderen Öfen üblicher Bauart befindet sich der Brenner im oberen Teil des Verbrennungsraumes, und die Flamme ist nach unten gerichtet. Diese Bauweise erlaubt es, die für das Verfahren wirksamen Elemente untereinanderzusetzen und auf diese Weise ein Gerät zu bilden, bei dem nacheinander ablaufen:

- die Synthese des Chlorwasserstoffgases,
- die Einführung der Absorptionslösung,
- die Absorption des Chlorwasserstoffgases,
- die Kühlung der konzentrierten Lösung.

Die Lösung fließt unter Schwerewirkung in das Innere der Vorrichtung. Sie rieselt über die Innenwand des Verbrennungsraumes und fließt dann kaskadenartig in die vertikalen Kanäle der Blöcke oder in die Röhren, reichert sich dabei mit Salzsäure an und wird wirksam gekühlt, bevor sie konzentriert und abgekühlt aus dem seitlichen Auslaß des Separators 3 austritt; die Gase gehen den gleichen Weg, verarmen dabei an Chlorwasserstoffsäure und treten aus der Anlage durch einen anderen Seitenauslaß des Separators 3 aus. Bei dieser Konstruktion ist jegliche Gefahr eines Überlaufens und Spritzens auf den Brenner ausgeschlossen.

Das Chlorwasserstoffgas und die Lösung fließen dabei parallel und gleichsinnig. Das Kühlwasser fließt demgegenüber in entgegengesetzter Richtung. Gegen die Umgebung durch einen Metallmantel isoliert, sind im Inneren die Austauschblöcke oder -röhren aufeinandergestapelt, das Wasser tritt in die Anlage durch das untere Seitenrohr ein. Mit Hilfe von senkrecht zu den Absorberkanälen verlaufenden Kanälen steigt es von Block zu Block oder von Ablenkblech zu Ablenkblech (im Falle von Röhren) bis an den Verbrennungsraum heran, der von ihm gekühlt wird, indem es um seine zylindrische Außenseite herum und in das Innere des von Hohlwänden umgebenen Brennerkopfs hineinfließt. Schließlich tritt das Wasser aus der Anlage durch das obere Seitenrohr des Mantels heraus. Selbst wenn sehr reines Chlorgas und sehr reiner Wasserstoff eingesetzt werden, empfiehlt es sich, mit Wasserstoff im Überschuß zu arbeiten. Dieser Überschuß stellt ein Inertgas dar. Andererseits besteht selbst beim Herstellen einer konzentrierten Säure (beispielsweise 33%) und selbst wenn die Säure gekühlt austritt, immer ein gewisser Partialdruck von HCl-Gas über der sehr stark HCl-konzentrierten Lösung. Die aus dem Separator 3 austretenden Gase enthalten daher eine gewisse Menge gasförmigen Chlorwasserstoffs (wenig unter normalen Betriebsbedingungen).

Dieses Gas darf nicht an die Umgebungsluft abgegeben werden, und aus diesem Grunde ist die Anlage mit einer Nachlaufsäule 4 ausgestattet, die unten die aus dem Separator 3 austretenden, zu reinigenden Gase und oben die Mengen an Wasser oder verdünnter Säure aufnimmt, die für die Herstellung der gewünschten konzentrierten Säure erforderlich sind.

Offensichtlich muß die einzusetzende Nachlaufsäule 4 größer gewählt werden, wenn Chlorgas und Wasserstoff viel Inertgas enthalten und die hergestellte Säure sehr konzentriert ist (beispielsweise 37%).

Die Nachlaufsäule 4 befindet sich oberhalb des Aggregats Ofen-Austauscher-Absorber-Separator, damit die säurereiche Lösung, die heraustritt und die die Absorptionslösung enthält, unter Schwerewirkung bis an das Verteilungselement des Aggregats gelangt.

Jedoch weist auch diese Anlage noch gewisse Nachteile auf: - nicht ausreichende Kompaktheit,
- verhältnismäßig lange Ansprechzeit zwischen Absorber und Nachlaufsäule,
- Anschlußleitungen zwischen der Hauptanlage und der Nachlaufsäule.

Der Erfindung liegt die Aufgabe zugrunde, diese Nachteile zu beseitigen.

Diese Aufgabe ist erfindungsgemäß durch eine Anlage mit den im Patentanspruch angegebenen Merkmalen gelöst. Bei dieser Anlage sind die folgenden Elemente
- Brenner
- Anordnung Ofen-Austauscher-Absorber
- Separator
- Nachlaufsäule
vertikal untereinander angeordnet und zu einem geschlossenen Aggregat zusammengefaßt.

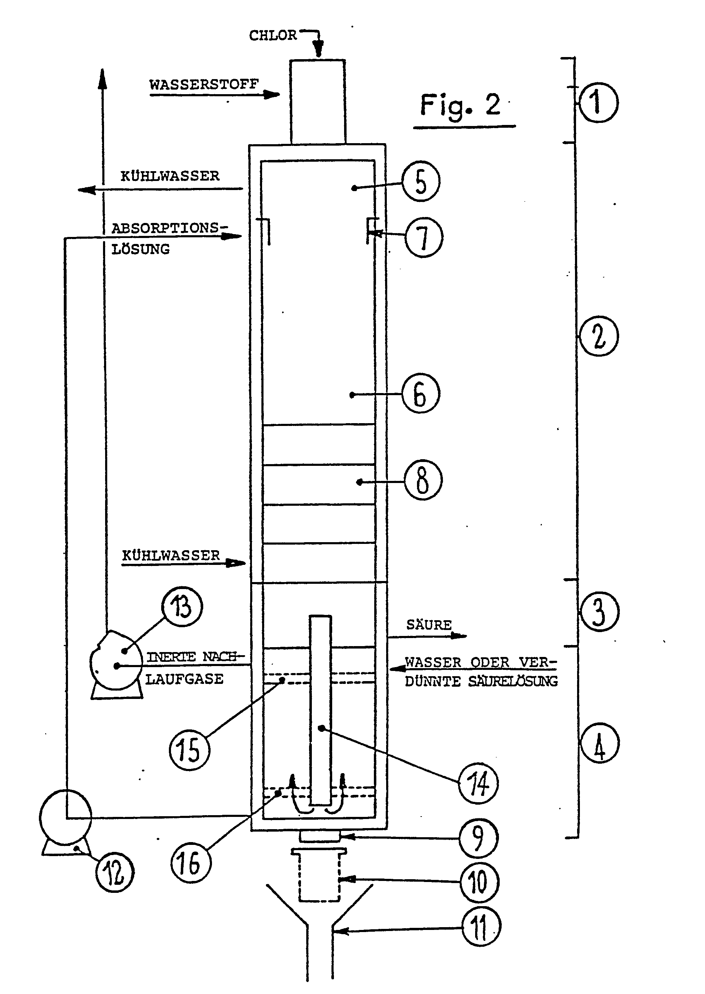

Figur 2 zeigt ein die Erfindung nicht einschränkendes Ausführungsbeispiel.

Die geschlossenen Herstellunganlage umfaßt:
- den Brenner 1,
- die Anordnung aus Ofen, Austauscher und Absorber,
- den Separator 3,
- die Nachlaufsäule 4.

Der Brenner 1 weist je einen Zulauf für Chlor und Wasserstoff auf. In der Ofen-Austauscher-Absorber-Anordnung 2 ist ein Verbrennungsraum 5 vorgesehen. Der Ofen 6 weist außerdem ein Verteilerelement 7 mit einem Zulauf für die Absorptionslösung auf. Der Austauscher-Absorber 8 setzt sich zusammen aus einem Stapel von Austauscherblöcken oder -röhren. Der Separator 3 besteht aus einem Abschnitt mit einem Flüssigkeitsschutz und zwei Auslässen: einem zentralen, axialen Auslaß für das nichtabsorbierte Gas, das in die unmittelbar darunter befindliche Nachlaufsäule geleitet wird, und einem seitlichen Auslaß, der die gekühlte Säurelösung aufnimmt. Die Nachlaufsäule 4 besteht insgesamt aus einem Zylinder aus korrosionsbeständigem Werkstoff (beispielsweise imprägniertem Graphit), der mit einer von einem Gitter 16 getragenen Auskleidung versehen ist, über die das Wasser oder die verdünnte Säure rieselt, die zuvor mittels einer Verteilungsvorrichtung 15 über den gesamten Querschnitt der Auskleidung verteilt wurde. Die nichtabsorbierten Gase fließen aus dem Separator 3 durch den unteren zentralen Schacht ab und werden in den unteren Teil der Nachlaufsäule 4 durch ein Zusatzrohr 14 geführt, das axial im Zentrum der Nachlaufsäule steht. Die Gase stoßen auf den Boden der Säule und durchsetzen die Auskleidung, die durch die Absorptionslösung befeuchtet wird. Der Kreislauf vollzieht sich gegenläufig. Die Inertgase werden aus der Nachlaufsäule mittels eines Lüfters 13 abgezogen, der an eine Rohrleitung angeschlossen ist, die sich im oberen Teil der Nachlaufsäule 4 befindet. Der Boden der Nachlaufsäule 4 ist mit einer Sicherheitsscheibe 9 versehen, die ihrerseits einen Schutzkorb 10 aufweist. Ein Auslaßsammler 11 erlaubt das Wegführen von nach außen dringenden Säurespritzern für den Fall der Zerstörung der Sicherheitsscheibe.

Die Absorptionslösung wird durch ständiges Umwälzen mit Hilfe der pumpe 12, die unten aus der Nachlaufsäule 4 absaugt und oben in das Absorber-Kühler-System 2 wieder einspeist, mit Salzsäure angereichert. Um das zu erreichen, ist die oben in der Säule eingespeiste Menge Wasser oder verdünnte Säure gleich der Menge der unten an dem Separator aufgefangenen Menge konzentrierte Säure.

Die Hauptvorteile einer derartigen Anordnung lassen sich in folgenden punkten zusammenfassen:
- die Gesamtanlage läßt sich am Boden aufstellen,
- die Kompaktheit der Anlage ist verbessert, und Verbindungsrohrleitungen, Flansche, Übergangsstücke und die verschiedensten Halterungen lassen sich vermeiden,
- Vereinfachung und Verkleinerung der Tragkonstruktion,
- Herabsetzung der Ansprechzeit zwischen Absorber und Nachlaufsäule.

Außerdem bietet die Erfindung den Vorteil, die produktionsanlage einschließlich der Nachlaufsäule durch eine einzige Sicherheitsscheibe schützen zu können, was bei den bekannten produktionsanlagen nicht möglich ist.

**Patentanspruch:**

Anlage zur Herstellung von Salzsäurelösung, mit einem Brenner (1), einer Anordnung (2) Ofen-Austauscher-Absorber, einem Separator (3) und einer Nachlaufsäule (4), wobei die drei erstgenannten Bauelemente in einem Aggregat untereinander angeordnet sind, dadurch gekennzeichnet, daß die Nachlaufsäule (4) in diesem Aggregat unterhalb des Separators (3) angeordnet ist, dan der Separator (3) aus einem Abschnitt besteht, der einen hydraulischen Schutz und zwei Ausgänge aufweist, von denen der eine mittig und axial angeordnet und für die nichtabsorbierten Gase vorgesehen ist, die in die unmittelbar darunterliegende Nachlaufsäule (4) eingeleitet werden, während der andere, seitliche Ausgang die kalte Säurelösung sammelt und daß die Nachlaufsäule (4) aus einem korrosionsbeständigen Zylinder besteht, der mit einer Auskleidung versehen ist, die von einem Gitter (16) getragen wird und über die das Wasser oder eine verdünnte Säurelösung rieselt, die dank einer Verteilungsvorrichtung (15) über den gesamten Querschnitt der Auskleidung verteilt ist und dan der Zylinder in seiner Mitte und in seiner Achse mit einem Zusatzrohr (14) versehen ist, in das die aus dem Separator (3) austretenden, nicht absorbierten Gase geleitet werden.

## Claim

1. An installation for the production of hydrochloric acid solution comprising a burner (1), a furnace-exchanger-absorber arrangement (2), a separator (3) and a last runnings column (4), wherein the first three components stated are arranged in a unit one beneath the other, characterised in that the last runnings column (4) is arranged in said unit beneath the separator (3), that the separator (3) comprises a portion which has a hydraulic protection means and two outlets,one of which is arranged centrally and axially and is provided for the nonabsorbed gases which are introduced into the last runnings column (4) which is disposed directly there beneath while the other lateral outlet collects the cold acid solution, and that the last runnings column (4) comprises a corrosion-resistant cylinder which is provided with a lining which is carried by a grid (16) and over which the water or a dilute acid solution trickles, which is distributed over the entire cross-section of the lining by way of a distribution means (15), and that the cylinder is provided in its centre and on its axis with an additional tube (14) into which are passed the non-absorbed gases issuing from the separator (3).

## Revendication

Unité de synthèse d'acide chlorhydrique en solution comprenant un brûleur (1), un dispositif (2) four-échangeur-absorbeur, un séparateur (3) et une colonne de queue (4) les trois premiers éléments étant disposés l'un au dessous de l'autre dans un mème appareil, unité caractérisée en ce que la colonne de queue (4) est placée en dessous du séparateur (3) dans cet appareil, que le séparateur (3) est constitué d'une enceinte comportant une garde hydraulique et deux sorties, une centrale et axiale pour les gaz non absorbés dirigés dans la colonne de queue située immédiatement en dessous, l'autre latérale collectant la solution d'acide froid et que la colonne de queue (4) est constituée d'un cylindre en matériau anti-corrosion rempli d'un garnissage supporté par une grille (16) et sur lequel ruisselle l'eau ou une solution d'acide dilué répartie sur toute la section du garnissage grâce à un dispositif de répartition (15), ledit cylindre étant muni en son centre et dans son axe d'un tube auxiliaire (14) dans lequel sont dirigés les gaz non absorbés provenant du séparateur (3).

## Fig. 1

WASSERSTOFF

CHLOR

INERTE GASE

WASSER ODER VERDÜNNTE SÄURELÖSUNG

KÜHLWASSER

ABSORPTIONS-LÖSUNG

KÜHLWASSER

NICHT ABSOR-BIERTES GAS

SÄURE

**0 103 863**

Fig. 2